# EUROPÄISCHE PATENTANMELDUNG

(11) **EP 4 806 306 A1**
(43) Veröffentlichungstag der Anmeldung: **16.09.2026**
(21) Anmeldenummer: 26156778.8
(22) Anmeldetag: 06.02.2026
(51) Int. Cl.: A47J 31/36, A47J 31/42

(54) **TEILHYDRAULISCHE BRÜHEINHEIT MIT MINIMALEM BAURAUM SOWIE GETRÄNKEZUBEREITUNGSVORRICHTUNG UNTER VERWENDUNG EINER SOLCHEN BRÜHEINHEIT**

(30) Priorität: 11.03.2025 DE 102025109255
(71) Anmelder: Eugster/Frismag AG, 8580 Amriswil (CH)
(72) Erfinder: Riessbeck, Wolfgang, 8597 Landschlacht (CH); van de Löcht, Hendrik, 8580 Amriswil (CH)
(74) Vertreter: Patent- und Rechtsanwälte Behrmann Wagner PartG mbB

(57) **Zusammenfassung**

Die Erfindung betrifft eine Brüheinheit für eine Getränkezubereitungsvorrichtung, insbesondere einen Kaffee- und/oder Espressovollautomaten, mit einer Antriebsmechanik zum Verschwenken und/oder linearen Verfahren einer Brühkammer zwischen mehreren Positionen, wobei die Brüheinheit ein die Antriebsmechanik, die Brühkammer und einen, in einer Brühposition die Brühkammer verschließenden Brühkopf aufnehmendes Gehäuse aufweist, wobei der Brühkammer und/oder dem Brühkopf ein Hydraulikzylinder zugeordnet vorgesehen ist, der ebenfalls in dem Gehäuse angeordnet ist, Erfindungsgemäß ist vorgesehen, dass das Gehäuse ein Volumen von 1.650 ccm, bevorzugt 1.450 ccm, nicht übersteigt.

## Beschreibung

Die vorliegende Erfindung betrifft eine Brüheinheit, insbesondere eine entnehmbare Brüheinheit, für eine Getränkezubereitungsvorrichtung, insbesondere einen Kaffee- und /oder Espressovollautomaten gemäß dem Oberbegriff des Anspruchs 1. Ferner betrifft die vorliegende Erfindung eine Getränkezubereitungsvorrichtung, insbesondere einen Kaffee- und/oder Espressovollautomaten, unter Verwendung einer, insbesondere entnehmbaren, Brüheinheit mit den Merkmalen des Oberbegriffs des Anspruchs 10.

Aus dem Stand der Technik sind verschiedenste Brüheinheiten, insbesondere auch entnehmbare Brüheinheiten, für Kaffeevollautomaten und ähnliche Getränkezubereitungsvorrichtungen bekannt. Grundlegender Zweck ist es ein Getränkesubstratmehl, beispielsweise Kaffeebohnenmehl, aufzunehmen, beispielsweise von einer Mahleinheit oder Mühle, dieses für einen Getränkeherstellungsprozess, beispielsweise das Aufbrühen oder Auslaugen vorzubereiten, beispielsweise vorzuverdichten und nach der Getränkezubereitung und Ausgabe des Getränks wieder auszugeben oder auszuwerfen, beispielweise als sogenannter Trester.

Hierbei existieren unterschiedlichste Ansätze und Ausgestaltungen.

Es existieren zum Beispiel rein mechanisch angetriebene Brüheinheiten. Diese lassen sich je nach Antriebsart, wie etwa Kniehebelmechanik, Spindelantrieb auch in gewissen Maßen miniaturisieren oder verkleinern.

So sind zum Beispiel rein mechanische Brüheinheiten vorbekannt, die verhältnismäßig wenig Bauraum benötigen (vgl.: Brühgruppe für Saeco Philips Talea Odea Primea Gaggia 996530003229 11005921 (aufwww.amazon.de, ASIN B08Q821 PYD, im Angebot seit 10. Dezember 2020).

Andererseits ist es bereits bekannt, dass über eine in die Brüheinheit integrierte Hydraulik, beispielsweise einen Hydraulikzylinder, Teile der notwendigen Bewegungen innerhalb der Brüheinheit ausgeführt oder unterstützt werden. Solche hydraulischen oder teilhydraulischen Ansätze haben gewisse Vorteile, wie beispielsweise der, dass von einem mechanischen Antrieb zum Verstellen und/oder Verfahren der Brüheinheit geringere Kräfte und Drehmomente bereitgestellt und übertragen werden müssen. Die Kombination von mechanischem und hydraulischen Antriebskomponenten in einer Brüheinheit benötigt mehr Bauraum, als lediglich ein mechanischer Antrieb.

Bei den gattungsgemäßen Getränkezubereitungsvorrichtungen, bei oder in denen solche Brüheinheiten zum Einsatz kommen besteht ein zunehmender Wunsch nach Ressourceneinsparungen sowohl bei der Herstellung als auch im Betrieb. Dies führt gerade für die Herstellung von Getränkezubereitungsvorrichtungen auch zu dem Wunsch der Materialeinsparung und damit zu dem Wunsch nach Miniaturisierung.

In der Regel kann eine Verkleinerung oder Miniaturisierung einer gattungsgemäßen Getränkezubereitungsvorrichtung nur in Wechselbeziehung mit einem Bedienkomfort oder einer Nutzerfreundlichkeit realisiert werden, weil die beteiligten Komponenten und Bauteile, die einer Verkleinerung zugänglich sind auch mit einer entsprechenden Funktion verknüpft sind, die ebenfalls von der Größe abhängen. So kann beispielsweise eine Verkleinerung erreicht werden, indem ein kleineres Reservoir für Brühfluid, beispielsweise ein Frischwassertank, verwendet wird. Dies führt aber dazu, dass das Brühwasserreservoir dann häufiger vom Bediener oder Benutzer aufgefüllt und/oder gespült werden muss. Gleiches gilt auch für Komponenten wie beispielsweise ein Getränkesubstratreservoir, beispielsweise einen Bohnenbehälter, eine Tropfwasserschale oder dergleichen.

Eine Miniaturisierung von Brüheinheiten ist ebenfalls nur schwer möglich, da beispielsweise die Qualität des erzeugten und abgegebenen Getränks auch von einem Durchmesser oder Querschnitt einer Brühkammer abhängt, wodurch gewisse Grenzen zur Miniaturisierung bestehen.

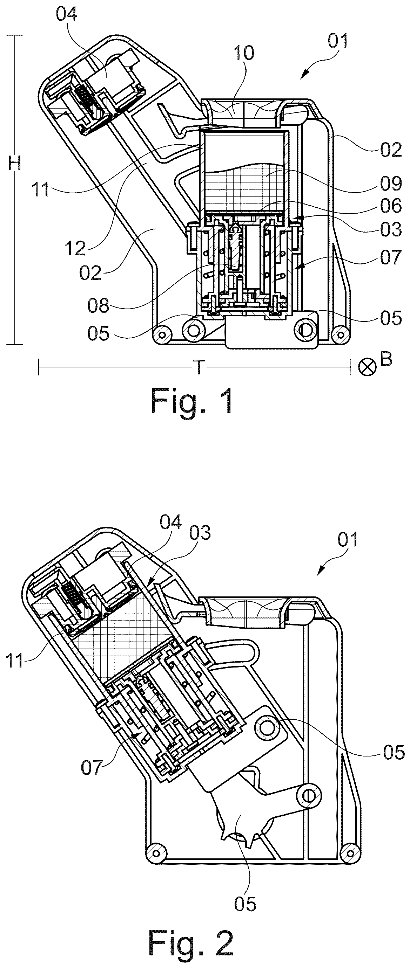

Die EP 0561741 A1 beschreibt ein Verfahren und eine Vorrichtung zur Zubereitung von Kaffeegetränken, bei der eine kombiniert mechanischhydraulische Brüheinheit zum Einsatz kommt. Das mechanische Verfahren der Brüheinheit ist beispielsweise in den Figuren 2 bis 4 dargestellt. Das hydraulische Tamper mit Brühfluid und das anschließende Durchbrühen durch den Hydraulikzylinder ist in Figur 1 erkennbar.

Die Aufgabe der vorliegenden Erfindung liegt folglich darin, die Nachteile im Stand der Technik zu überwinden und insbesondere eine Brüheinheit, bevorzugt eine entnehmbare Brüheinheit, vorzuschlagen, die bei gleichbleibender Qualität der erzeugten Getränke und auch bei ansonsten unbeeinträchtigter Funktionalität nur ein Mindestmaß an Bauraum benötigt. Die vorliegende Aufgabe wird bezüglich einer Brüheinheit für eine Getränkezubereitungsvorrichtung mit den Merkmalen des Anspruchs 1 gelöst. Im Hinblick auf eine Getränkezubereitungsvorrichtung wird die Aufgabe mit einer Vorrichtung mit den Merkmalen des Anspruchs 10 gelöst.

Vorteilhafte Weiterbildungen der Erfindung sind Gegenstand der nachfolgenden Beschreibung, der Figuren, der Figurenbeschreibung sowie der Unteransprüche.

Grundsätzlich sollen allen nachfolgend vorrichtungsmäßig offenbarten Merkmale auch als entsprechend verfahrensmäßig offenbart gelten und beanspruchbar sein, sowie umgekehrt.

Die Brüheinheit für eine Getränkezubereitungsvorrichtung gemäß der vorliegenden Erfindung, insbesondere die Brüheinheit für einen Kaffee- und/oder Espressovollautomaten umfasst eine Antriebsmechanik zum Verschwenken und/oder linearen Verfahren einer Brühkammer zwischen mehreren Positionen, wobei die Brüheinheit neben der Antriebsmechanik auch die Brühkammer sowie einen in einer Brühposition die Brühkammer verschließenden Brühkopf aufweist, die allesamt in einem gemeinsamen Gehäuse angeordnet oder aufgenommen sind, wobei der Brühkammer und/oder dem Brühkopf ein Hydraulikzylinder zugeordnet vorgesehen ist, der ebenfalls in dem besagten Gehäuse angeordnet ist.

Erfindungsgemäß ist vorgesehen, dass das Gehäuse ein Volumen von 1650 cm³, bevorzugt 1450 cm³ nicht übersteigt. Wie unten noch im Detail ausgeführt, kann das Volumen vorteilhaft bereits einen geräteseitigen Antrieb mitumfassen, die einen Motor und/oder eine mechanische Übersetzungseinheit umfasst. Die in dieser Beschreibung angegebenen Volumina betreffen Körpervolumen, bevorzugt von jeweiligen umhüllenden Gehäusen, und nicht etwa Würfelabmaße.

Die Grundidee der vorliegenden Erfindung basiert darauf, dass über eine besonders geschickte Verknüpfung eines teilweise hydraulischen und teilweise mechanischen Antriebs- und/oder Bewegungskonzeptes einer Brüheinheit eine Miniaturbrüheinheit bereitgestellt werden kann, die keine Qualitätseinbußen im Hinblick auf die hergestellten Getränke verursacht, die auf den großen Erfahrungsschatz von Brühkammern mit einer Antriebsmechanik zum Verschwenken und/oder linearen Verfahren der Brühkammer - sogenannten Kniehebelbrüheinheit - aufbaut und/oder diesen nutzt und gleichzeitig nur sehr wenig Bauraum verwendet und damit sowohl für die Brüheinheit selbst, als auch für die Getränkezubereitungsvorrichtung eine erhebliche Verkleinerung ermöglicht, ohne dass dadurch Nachteile im Hinblick auf Bedienerkomfort, Bedienbarkeit oder Funktionsumfang entsteht.

Das Gehäuse der erfindungsgemäßen Brüheinheit soll die Grenzen der Brüheinheit definieren. Dazu ist es jedoch nicht notwendig, dass das besagte Gehäuse an allen Seiten und in allen Bereichen geschlossen, insbesondere durchgängig geschlossen ist. Vielmehr soll das Gehäuse auch an offenen Stellen oder in unverschlossenen Bereichen als minimale, die Komponenten der, insbesondere entnehmbaren, Brüheinheit einhüllende Kontur verstanden werden. Die gattungsgemäßen Gehäuse sind seltenst vollständig geschlossen oder anders ausgedrückt in aller Regel teilweise offen ausgeführt, um unter anderem eine Reinigung, Reparatur oder sonstige Pflegearbeiten an der Brüheinheit zu ermöglichen.

Als Antriebsmechanik kann besonders vorteilhaft, wie oben bereits angedeutet, eine Antriebsmechanik zum Einsatz kommen, die im Fachjargon mitunter auch als "Kniehebelantrieb" bezeichnet wird, auch wenn dieser Begriff technisch nicht hundertprozentig zutreffen ist. Im Wesentlichen zeichnen sich derartige Antriebsmechaniken dadurch aus, dass Getränkesubstratmehl, insbesondere Kaffeebohnenmehl regelmäßig nur unter Einfluss von Schwerkraft und gegebenenfalls weiteren Leitstrukturen, in einer Mahlposition in die geöffnete Brühkammer eingefüllt werden kann, die Brühkammer anschließend über ein Verschwenk- und/oder Verfahrbewegung verschlossen und in eine Brüh- und/oder Spülposition überführbar ist und zudem im Anschluss an eine weitere Verfahr- und/oder Schwenkbewegung die Brühkammer in eine abermalige geöffnete Ausstoßerposition überführbar ist, in der das aufgebrühte und/oder ausgelaugte Getränkesubstratmehl ausgeworfen werden kann, bevor die Antriebsmechanik die Brühkammer erneut in die Mahlposition überführt.

Der von der Brüheinheit umfasste Hydraulikzylinder kann grundsätzlich unterschiedliche Funktionen oder Funktionalität erfüllen oder bereitstellen. Auf diese wird im Rahmen der vorteilhaften Ausführungsform noch genauer eingegangen werden. Besonders bevorzugt kann jedoch vorgesehen sein, dass der Hydraulikzylinder im Zusammenhang mit dem Tampern, und/oder Ausstoß des Getränkesubstratmehls oder Tresters zum Einsatz kommt.

Gemäß einer ersten besonders vorteilhaften Ausführungsform der Brüheinheit kann vorgesehen sein, dass das Gehäuse eine Höhe von 185 mm, bevorzugt 180 mm, nicht übersteigt. Dies hat den Vorteil, dass damit nicht nur der Bauraum der Brüheinheit reduziert wird, sondern dass auch die Gesamthöhe einer Getränkezubereitungsvorrichtung, bei der das Getränkesubstratreservoir, beispielsweise in Form eines Bohnenbehälters, und die dazugehörige Mahleinheit regelmäßig übereinander sowie oberhalb der Brüheinheit angeordnet werden. Dementsprechend führt eine Reduktion der Gesamthöhe der Brüheinheit auch bei unveränderter Mahleinheit und/oder Getränkesubstratreservoir zu einer entsprechenden und unveränderten Reduktion der Höhe der Getränkezubereitungsvorrichtung.

Gemäß einer weiteren, besonders vorteilhaften Ausgestaltung kann vorgesehen sein, dass das Gehäuse eine Breite von 85 mm, besonders bevorzugt 80 mm nicht übersteigt. Ein möglicherweise seitlich, bevorzugt in Breitenrichtung, über das Gehäuse überstehend, ein Griff oder Henkel realisiert. Dieser wird bei der Betrachtung der Breite des Gehäuses außer Betracht gelassen. Gleichfalls wird ein seitlich vom Gehäuse abragender Fluidanschluss ebenfalls bei der Berechnung des Breites des Gehäuses nicht berücksichtigt. Besonders bevorzugt kann auch zusammen mit einem geräteseitigen Antrieb, bevorzugt umfassend einen Motor und eine mechanische Übersetzung, eine Breite von weniger als 115 mm, bevorzugt von weniger als 113 mm realisiert werden. Auch dies führt logischerweise zu einer Platz-, Bauraum- und Materialeinsparung für die Brüheinheit selbst. Für Getränkezubereitungsvorrichtungen mit einer erfindungsgemäß entnehmbaren Brüheinheit ist regelmäßig vorgesehen, dass diese auf einer Seite der Getränkezubereitungsvorrichtung angeordnet ist, um ein möglichst einfaches und effektives Entnehmen und Wiedereinsetzten zu ermöglichen. Dementsprechend führt eine verringerte Breite der Brüheinheit auch bei ansonsten unveränderten Komponenten der Getränkezubereitungsvorrichtungen unmittelbar zu einer Reduzierung der Breite der gesamten Getränkezubereitungsvorrichtung.

In einer weiteren, besonders wünschenswerten Ausführungsform kann vorgesehen sein, dass das Gehäuse eine Tiefe von 185 mm, bevorzugt von 175 mm nicht übersteigt. Vor der Brüheinheit ist regelmäßig ein Auffangbehälter für Trester angeordnet. Eine verkleinerte, maximale Tiefe von weniger als 185 mm, bevorzugt weniger als 175 mm führt dementsprechend dazu, dass sowohl die Brüheinheit selbst als auch die Getränkezubereitungsvorrichtung insgesamt weniger tief ausfällt, da bei gleichbleibend groß dimensioniertem Tresterauffangbehälter in der Tiefenrichtung weniger Bauraum benötigt wird.

In einer weiteren vorteilhaften Ausgestaltung der Brüheinheit kann vorgesehen sein, dass die Antriebsmechanik zur Verstellung der Brühkammer in eine Verschlussposition eingerichtet ist, wobei die Antriebsmechanik so ausgebildet und/oder dimensioniert ist, dass allein über die Antriebsmechanik, insbesondere ohne Verstellung und/oder Betätigung des Hydraulikzylinders die Brühkammer, insbesondere eine Brühkammerwand zur dichtenden Anlage an dem Brühkopf bringbar ist. Die entsprechende Ausgestaltung der Antriebsmechanik hat verschiedene Vorteile. Einerseits wird ermöglicht, dass der Verschluss der Brühkammer am oder durch den Brühkopf kraftlos hergestellt wird, was bedeutet, dass kaum oder keine mechanische Rückstell- oder Federkräfte überwunden werden müssen, um die Brühkammer zu verschließen. Dies hat wiederum den Vorteil, dass zum Antrieb der Antriebsmechanik geringer dimensionierte Antriebe, beispielsweise Elektromotoren, vorgesehen werden müssen. Gleichzeitig führt dies jedoch auch dazu, dass insgesamt auf Seiten der Brüheinheit geringere Kräfte aufgenommen und abgeleitet werden müssen, wodurch ein platz- und materialsparender Aufbau der Brüheinheit ermöglicht und weiter verbessert werden kann.

Gemäß einer weiteren, besonders vorteilhaften Ausgestaltung der Brüheinheit kann vorgesehen sein, dass die Antriebsmechanik so ausgebildet ist, dass ein lineares Verfahren zwischen einer offenen Stellung und einer Verschlussposition der Brühkammer ermöglicht wird, wobei ein Verfahrweg beim linearen Verfahren weniger als 60 mm, bevorzugt von weniger als 50 mm, beträgt. Ein geringer Verfahrweg zwischen einer geöffneten Stellung und einer Verschlussposition führt zu einer entsprechend platzsparenden Gesamtausführung der Brühkammer. Besonders durch eine intelligente Kombination von mechanisch verursachter oder bewerkstelligter Bewegung und hydraulisch verursachter oder bewerkstelligter Bewegung kann der lineare Verfahrweg der mechanisch über die Antriebsmechanik bereitgestellt wird minimiert werden und dadurch wiederum der notwendige Bauraum und insbesondere die notwendige Höhe und Tiefe der Brüheinheit - der lineare Verfahrweg gattungsgemäßer Brüheinheiten verläuft regelmäßig zum Teil in Höhenrichtung und zum Teil in Tiefenrichtung - reduziert werden.

In einer weiteren, besonders vorteilhaften Ausgestaltung der Brühkammer kann vorgesehen sein, dass der Hydraulikzylinder so mit der Brühkammer zusammenwirkend ausgebildet ist, dass mittels einer Verstellung des Hydraulikzylinders ein Brühkammerboden der Brühkammer gegenüber einer Brühkammerwand der Brühkammer höhenverstellbar ist. Die Verstellung des Hydraulikzylinders wird im Wesentlichen durch den Zufluss oder Abfluss von Hydraulikfluid in den Hydraulikzylinder oder aus dem Hydraulikzylinder heraus bewirkt. Besonders vorteilhaft kann Brühfluid als Hydraulikfluid verwendet werden. Die Höhenverstellung des Brühkammerbodens gegenüber der Brühkammerwand kann beispielsweise so realisiert werden, dass der Brühkammerboden direkt oder unmittelbar mit dem Hydraulikzylinder verbunden und ansonsten verstellbar gegenüber der Brühkammerwand gelagert ist, wohingegen die Brühkammerwand fest gegenüber dem beweglichen oder verstellbaren Teil des Hydraulikzylinders angeordnet und befestigt ist. Besonders vorteilhaft kann die Höhenverstellung des Brühkammerbodens sowohl zum Tampern von Getränkesubstrat als auch zum Auswerfen des Tresters nach der Getränkeherstellung oder dem Brühvorgang verwendet werden.

Gemäß einer besonders bevorzugten Ausgestaltung der Brüheinheit kann vorgesehen sein, dass der Hydraulikzylinder ein unteres Ende der Brühkammer ausbildet und insbesondere keine Bauteile zum Verstellen des Brühkammerbodens bodenseitig über den Hydraulikzylinder hervorragen oder überstehen. Dadurch kann ebenfalls in besonders vorteilhafterweise die gesamte Größe oder der insgesamt benötigte Bauraum der Brüheinheit minimiert werden.

Besonders vorteilhaft kann auch vorgesehen sein, dass in keiner Stellung oder Position der Brühkammer der Hydraulikzylinder oder sonstige Bestandteile der Brüheinheit aus dem Gehäuse vorstehen oder herausragen. Denn es führt insgesamt nicht zu einer Bauraumreduzierung auf Seiten der Getränkezubereitungsvorrichtung, wenn zwar eine Brüheinheit mit minimiertem Gehäuse bereitgestellt wird, aus diesem Gehäuse oder über dieses Gehäuse dann in unterschiedlichen Stellungen oder Positionen der Brüheinheit oder der Brühkammer dann gewisse Bauteile herausragen oder überstehen, da dies zumindest auf Seiten der Getränkezubereitungsvorrichtung dennoch zu entsprechendem Platzbedarf führt.

In einer weiteren, besonders vorteilhaften Ausgestaltung der Brüheinheit kann vorgesehen sein, dass der Hydraulikzylinder einen Fluideinlass aufweist, der fluidleitend mit einer Brühfluidzuleitung der Getränkezubereitungsvorrichtung verbindbar ist, wobei der Hydraulikzylinder mit einem ausgangsseitigen Überdruckventil versehen ist, dass in fluidleitender Verbindung mit der Brühkammer ausgebildet ist, welches beim Überschreiten eines Grenzdrucks die Zufuhr von Brühfluid in die Brühkammer freigibt, sodass Brühfluid aus dem Hydraulikzylinder abfließt und in die Brühkammer einströmt.

Durch eine solche Ausgestaltung wird einerseits der gesamte Fluidkreislauf der Brühkammer deutlich vereinfacht, weil im Wesentlichen nur ein Fluidpfad bereitgestellt werden muss und nur ein einziges Fluid, nämlich Brühfluid bereitgestellt werden muss. Weiterhin wird dadurch ermöglicht, dass lediglich über die Vorgabe oder Einstellung des Überdruckventils - besonders über die Vorgabe des baulich bedingten Öffnungsdrucks - ein reproduzierbarer Anpressdruck oder Tamperdruck bei jedem Brühvorgang realisiert werden kann, weil das Überdruckventil den Innendruck im Hydraulikzylinder begrenzt und der Hydraulikzylinder, insbesondere bei einer direkten Kopplung mit dem Brühkammerboden oder Brühkammerkopf eine feste, reproduzierbare Anpresskraft auf das in der Brühkammer befindliche Getränkesubstratmehl, insbesondere in weiten Bereich unabhängig von der Menge an Getränkesubstratmehl, ausübt, bevor das Überdruckventil öffnet und das auch als Hydraulikfluid wirkende Brühfluid in die Brühkammer einströmt. Zumindest die Vereinfachung des Fluidkreislaufs der Brühkammer kann in vorteilhafterweise genutzt werden, um den insgesamt benötigten Bauraum zu reduzieren.

Die oben genannte Aufgabe wird auch durch eine Getränkezubereitungsvorrichtung, insbesondere einen Kaffee- und/oder Espressovollautomaten gelöst, die eine, insbesondere entnehmbare, Brüheinheit und einen fest verbauten, bevorzugt elektromotorischen, Antrieb zum Antrieb einer Antriebsmechanik der Brüheinheit, umfasst wobei der Antrieb Kopplungsmittel, zum bevorzugt lösbaren, Koppeln mit der Brüheinheit umfasst.

Erfindungsgemäß ist dabei vorgesehen, dass eine Brüheinheit gemäß einer der vorangehenden Ausführungsformen vorgesehen ist.

Die Getränkezubereitungsvorrichtung kann neben der, bevorzugt entnehmbaren, Brüheinheit und dem Antrieb vorteilhaft weitere Komponenten umfassen. Neben den oben bereits genannten Komponenten wie beispielsweise Brühfluidreservoir, Getränkesubstratreservoir, Mahleinheit, Restwasserschale, Tresterbehälter und dergleichen können zudem von der Getränkezubereitungsvorrichtung eine Pumpe zum Fördern des Brühfluids, eine Heizeinrichtung zum Erwärmen des Brühfluids, eine oder mehrere Ventileinrichtungen zur Steuerung des Fluidflusses des Brühfluids sowie ein in unterschiedlichen Ausführungsformen bekanntes Milchmodul, zum Erwärmen und/oder Aufschäumen von Milch oder vergleichbaren eiweißhaltigen Flüssigkeiten umfasst sein.

Bezüglich der Vorteile und vorteilhaften Wirkungen der erfindungsgemäßen Getränkezubereitungsvorrichtung wird auf die vorangehende Beschreibung der erfindungsgemäßen Brüheinheit verwiesen, in der die vorteilhaften Wirkungen für die Getränkezubereitungsvorrichtung teilweise schon explizit mit aufgeführt sind.

Zusammengefasst kann insgesamt eine verhältnismäßig kleine Getränkezubereitungsvorrichtung ermöglicht werden, die nur sehr wenig Bauraum beansprucht und dementsprechend platz- und ressourcensparend hergestellt und betrieben werden kann, ohne dass gleichzeitig merkbare Abstriche hinsichtlich der Bediener- oder Benutzerfreundlichkeit hingenommen werden müssen, beispielsweise, weil Gefäße wir Reservoire, Auffangschalen oder Tropfschalen übermäßig verkleinert ausgebildet sind. Auch können trotz der sehr kleinen Brüheinheit hochwertige Getränke hergestellt und ausgegeben werden, insbesondere da der Durchmesser oder Querschnitt der Brühkammer nicht gegenüber bekannten und qualitativ hochwertigen Brüheinheit verkleinert wird.

In einer vorteilhaften Weiterbildung ist vorgesehen, dass die Brüheinheit entnehmbar ausgebildet ist. Zum Beispiel kann ein Seitenteil eines Gehäuses der Getränkezubereitungsvorrichtung lösbar sein, um darüber Zugriff zu der Brüheinheit zu erhalten. Die Brüheinheit kann mechanisch mit Sicherungsmitteln gesichert sein, um ein unabsichtliches oder ungewolltes Entnehmen zu verhindern.

In einer weiteren, besonders vorteilhaften Ausführungsform der Getränkezubereitungsvorrichtung kann vorgesehen sein, dass der Antrieb einen maximalen Ausgangsdrehmoment von weniger als 3,0 Nm, bevorzugt weniger als 2,2 Nm, erzeugt. Dadurch kann in besonders vorteilhafterweise nicht nur eine kompakte Getränkezubereitungsvorrichtung, sondern auch im Betrieb besonders sparsam Getränkezubereitungsvorrichtungen bereitgestellt werden. Es kann vorteilhaft vorgesehen sein, dass die maximale Leistungsaufnahme des Antriebs weniger als 25 Watt, bevorzugt weniger als 22 Watt, beträgt.

In einer weiteren, besonders vorteilhaften Ausgestaltung der Getränkezubereitungsvorrichtung kann vorgesehen sein, dass der Antrieb so ausgebildet und eingerichtet ist, dass ein Verschwenken und lineares Verfahren der Brühkammer aus einer Mahlposition in eine Verschlussposition in weniger als 4s, bevorzugt in weniger als 3s erfolgt. Dadurch kann der Getränkebezug in einer verhältnismäßig kurzen Zeit abgearbeitet werden.

In einer besonders vorteilhaften Weiterbildung kann vorgesehen sein, dass die Breite der Brüheinheit samt Antrieb der Getränkezubereitungsvorrichtung, der bevorzugt einen Motor und eine mechanische Übersetzung umfasst, insbesondere in einem gekoppelten Zustand, mit einem in Breitenrichtung seitlich überstehenden Griff der Brüheinheit geringer als 130 mm und/oder ohne einen Griff von weniger als 110 mm erreicht werden. Der Antrieb kann ein Antriebsgehäuse aufweisen, das die Breite definiert. Der gekoppelte Zustand ist der Zustand, in dem ein Antrieb der Antriebsmechanik mittels des Antriebs stattfinden kann. Bei entnehmbaren Brüheinheiten ist der gekoppelte Zustand auch ein eingesetzter Zustand der Brüheinheit. Damit kann eine insgesamt wenig breite Getränkezubereitungsvorrichtung ermöglicht werden, die beispielsweise auf einem Tresen oder einer Arbeitsfläche, wenig Aufstellfläche benötigt.

In einer weiteren besonders vorteilhaften Ausgestaltung kann vorgesehen sein, dass das Volumen der Brüheinheit zusammen mit dem Antrieb der Getränkezubereitungsvorrichtung weniger als 1.750 ccm, bevorzugt weniger als 1.650 ccm, beträgt. Das Volumen des Antriebs kann vorteilhaft über ein Antriebsgehäuse definiert werden.

In einer weiteren, besonders vorteilhaften Ausgestaltung der Getränkezubereitungsvorrichtung kann weiter vorgesehen sein, dass der Antrieb so ausgebildet und eingerichtet ist, dass ausgehend von einer Mahlposition der Brühkammer ein Hin- und Zurückschwenken, bevorzugt gegen einen Anschlag der Brüheinheit oder der Getränkezubereitungsvorrichtung ausführbar ist. Dadurch kann sichergestellt werden, dass in der Brühkammer befindliches Getränkesubstratmehl gleichmäßiger verteilt ist, was besonders die Vorverdichtung des Getränkesubstratmehls verbessert und erleichtert.

In einer weiteren, besonders wünschenswerten Ausführungsform der Getränkezubereitungsvorrichtung kann vorgesehen sein, dass eine Fluidzuleitung für eine Übertragung eines Fluids, bevorzugt Brühfluid, an die Brüheinheit umfasst ist, wobei die Fluidzuleitung in einem eingesetzten Zustand der Brüheinheit permanent mit der Brüheinheit verbunden ist und nur getrennt oder unterbrochen wird, wenn die Brüheinheit aus der Getränkezubereitungsvorrichtung entnommen wird.

Dadurch kann in besonders vorteilhafterweise Leckagen und ungewollte Austritte von Flüssigkeiten oder Fluid verhindert werden. Gleichzeitig wird in vorteilhafterweise die Konstruktion der Getränkezubereitungsvorrichtung und auch der Brüheinheit vereinfacht, weil keine Mittel vorgesehen werden müssen, die bei jedem Getränkebezug oder bei jedem Zyklus der Brüheinheit zur Getränkeherstellung und/oder Getränkeausgabe eine Verbindung zwischen Fluidzuleitung der Getränkezubereitungsvorrichtung und der Brüheinheit herstellen und anschließend wieder trennen müssen. Derartige trennbare Fluidverbindungen sind sowohl störanfällig als auch bauraumintensiv.

Die vorliegende Erfindung wird nachfolgend anhand von rein schematischen, Ausführungsbeispielen der Erfindung zeigenden Zeichnungen erläutert werden:
Darin zeigen:
- Fig. 1:: eine Schnittdarstellung durch eine erfindungsgemäße Brüheinheit in einer Mahlposition;
- Fig. 2:: einen Schnitt durch eine erfindungsgemäße Brüheinheit in einer Verschlussposition;
- Fig. 3:: eine schematische Schnittdarstellung durch eine erfindungsgemäße Brüheinheit in einer Brühposition;
- Fig. 4:: eine schematische Schnittdarstellung durch eine erfindungsgemäße Brüheinheit in einer Auswurfposition.

Die Fig. 1 zeigt eine erfindungsgemäße Brüheinheit 01, die ein Gehäuse 02, eine Brühkammer 03, einen Brühkopf 04 sowie eine Antriebsmechanik 05aufweist, wobei letztere dazu eingerichtet ist die Brühkammer 03 zu verschwenken und/oder linear zu verfahren.

Die Brühkammer 03, insbesondere ein Brühkammerboden 06 steht in direkter mechanischer Wirkverbindung mit einem Hydraulikzylinder 07. Der Hydraulikzylinder 07 ist auf einer Eingangsseite mit einem Brühfluidzufluss fluidleitend verbunden, der nicht im Detail dargestellt ist. Auf einer Ausgangsseite weist der Hydraulikzylinder 07 ein Überdruckventil 08 auf, dass ermöglicht, dass Hydraulikfluid, welches bevorzugt auch als Brühfluid fungiert und in einem unverzweigten Fluidpfad die Brüheinheit 01 durchströmt, aus dem Hydraulikzylinder 07 abfließt und in die Brühkammer 03 strömt. Der Innendruck im Hydraulikzylinder 07, bei dem ein Durchfluss von Hydraulikfluid/Brühfluid in die Brühkammer 03 freigegeben wird, wird somit über die Eigenschaften des Überdruckventils 08 bestimmt. Über die unmittelbare Einwirkung auf den Brühkammerboden 06 wird damit über das Überdruckventil 08 auch ein Vorverdichten des Getränkesubstratmehls 09, beispielsweise Kaffeebohnenmehl, definiert. Auch der Druck auf die Brühkammer 03 während des Brühens wird über das Überdruckventil 08 mitgesteuert, weil nur während des geöffneten Überdruckventils 08 Brühfluid in die Brühkammer 03 strömen kann.

In der Darstellung der Fig. 1 befindet sich die Brüheinheit 01 in einer Mahlposition. Das Gehäuse 02 weist eine Befüllöffnung 10 auf, über die, beispielsweise schwerkraftbedingt, Getränkesubstratmehl 02 von einer Mahleinheit - in der Figur 1 nicht dargestellt - in die Brüheinheit 01 eingefüllt werden kann.

Das Gehäuse 02 kann darüber hinaus auch weitere Durchbrechungen und Öffnungen aufweisen. Insgesamt definiert das Gehäuse 02 aber eine Tiefe T, die 185 mm, bevorzugt 175 mm nicht übersteigt. Durch das Gehäuse wird auch eine maximale Höhe H definiert, die 185 mm, bevorzugt 180 mm nicht überschreitet.

In die Zeichenebene hinein wird durch das Gehäuse 02 eine maximale Breite B erreicht, die mit einem seitlich abstehenden Griff 115 mm, bevorzugt 110 mm, nicht übersteigt. Ohne Griff kann eine Breite B von weniger als 85 mm, bevorzugt von weniger als 80 mm erreicht werden. Zusammen mit einem nicht dargestellten Antrieb der Getränkezubereitungsvorrichtung kann immerhin noch eine Breite von weniger als 130 mm erreicht werden, selbst wenn der seitlich über das Gehäuse überstehende Griff einberechnet wird. Ohne einen Griff kann im gekoppelten Zustand der Brüheinheit 03 am Antrieb eine Breite von weniger als 110 mm erreicht werden.

Insgesamt ist vorgesehen, dass das Gehäuse 02 ein Volumen von 1.650 ccm, bevorzugt 1.450 ccm, nicht übersteigt. Besonders vorteilhaft kann vorgesehen sein, dass das mitsamt dem geräteseitigen Antrieb, bevorzugt begrenzt über ein Antriebsgehäuse, ein Volumen von 1.750 ccm, bevorzugt von 1.650 cmm, nicht überstiegen wird. Der Antrieb umfasst vorteilhaft einen Motor und eine mechanische Übersetzungs- und/oder Getriebeeinheit.

Die Erfindung hat in besonders vorteilhafterweise erkannt, dass bei einer mechanischen Antriebsmechanik 05 in Kombination mit dem Hydraulikzylinder 07 insgesamt eine sehr kompakte Bauweise der Brüheinheit 01 möglich wird, welche das vorangehend genannte Volumen, sowie die vorangehend genannte Höhe H, Breite B und Tiefe T ermöglicht.

In der Fig. 2 ist die erfindungsgemäße Brüheinheit in einer Verschlussposition dargestellt. Es ist erkennbar, dass der Hydraulikzylinder 07 noch nicht mit Hydraulikfluid gefüllt ist. Die Brühkammer 03, insbesondere die Brühkammerwand 11 liegt dichtend an dem Brühkopf 04 an und verschließt damit die Brühkammer 03. In besonders vorteilhafter Weise kann das Verschließen der Brühkammer - der Übergang von der Darstellung der Fig. 1 zur Darstellung der Fig. 2 - kraftlos erfolgen. Dies bedeutet, dass keine mechanischen Rückstellkräfte, Federkräfte oder dergleichen überwunden werden müssen, um den Zustand der Fig. 2 zu erreichen. Besonders vorteilhaft kann vorgesehen sein, dass ein Verfahrweg zum linearen Verfahren der Brühkammer 03, beispielsweise entlang der in der Fig. 1 dargestellten Führung 12 weniger als Z cm beträgt. Durch einen kurzen Verfahrweg kann sichergestellt werden, dass die oben genannten maximalen Abmessungen und das maximale Volumen eingehalten werden und dass das Erreichen der unterschiedlichen Positionen der Brüheinheit innerhalb kurzer Zeitintervalle ermöglicht wird. Besonders vorteilhaft lässt sich ein geringer Verfahrweg von weniger als Z cm mit einem Hydraulikzylinder 07 kombinieren. In der Fig. 2 ist erkennbar, dass die Antriebsmechanik 05 der Brüheinheit 01 so ausgebildet ist, dass die Brühkammer 03 in die dargestellte Verschlussposition überführt werden kann. Einzig und allein dadurch, dass die Antriebsmechanik betätigt oder verstellt wird und insbesondere ohne dass der Hydraulikzylinder betätigt, befüllt oder verstellt wird.

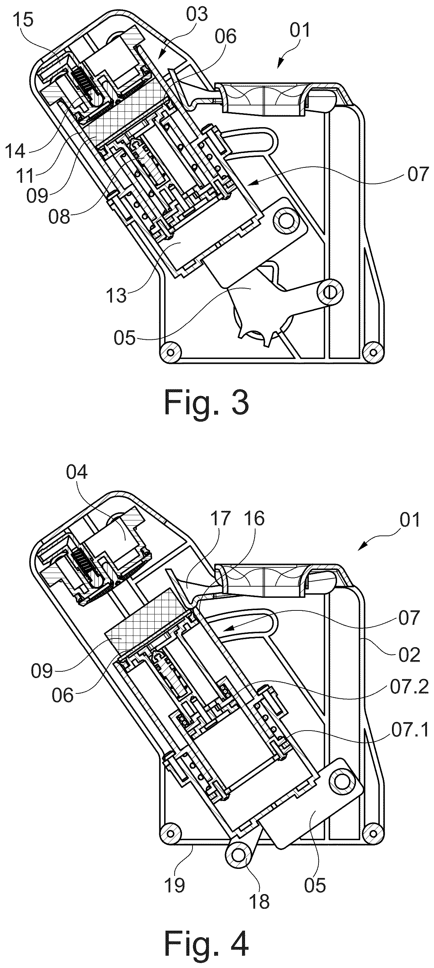

In der Fig. 3 ist die Brüheinheit 01 in einer Brühposition dargestellt. Es ist erkennbar, dass im Hydraulikzylinder 07, der bevorzugt und platzsparend ein unteres Ende der Brühkammer 03 ausbilden kann, in einem unteren Bereich 13 ein Hydraulikfluid, bevorzugt ein Brühfluid mit gleichzeitiger Funktionalität als Hydraulikfluid eingefüllt ist. Dementsprechend ist der Brühkammermoden 06 innerhalb der Brühkammer 03, insbesondere gegenüber der Brühkammerwand 11 gegenüber der Situation oder Position der Fig. 2 verstellt worden. Dies führt dazu, dass das Getränkesubstratmehl 09 innerhalb der Brühkammer zwischen Brühkopf 04 und Brühkammerboden 06 komprimiert oder getampert wird. Die mechanische Antriebsvorrichtung kann in einen überstreckten oder ansonsten gesicherten Zustand befindlich sein, um sicherzustellen, dass die Antriebsmechanik 05 und/oder der geräteseitige Antrieb zur Erreichung der Brühposition kraftlos und/oder energielos geschaltet werden kann/können und gleichzeitig die Antriebsmechanik 05 als Wiederlager für die Kräfte des Hydraulikzylinders 07 fungieren kann. Sobald der Innendruck im Hydraulikzylinder 07, insbesondere im unteren Bereich 13 ein Grenzdruck überschreitet, öffnet das Überdruckventil 08 und das Hydraulikfluid oder Brühfluid kann in die Brühkammer 03 einströmen, beispielsweise durch einen Brühkammerboden 06 mit einer Lochung oder Perforierung. Daraufhin steigt der Innendruck innerhalb der Brühkammer 03 an, bis ein Auslassventil 14, das mitunter auch als Cremaventil bezeichnet wird, geöffnet wird. Das Auslassventil 14 kann ebenfalls als Überdruckventil ausgebildet sein und selbstständig oder selbsttätig öffnen, wenn innerhalb der Brühkammer 03 ein ausreichender Druck vorherrscht oder aufgebaut ist. Über den an das Auslaufventil 14 anschließenden Auslauf 15 kann ein innerhalb der Brühkammer 03 erzeugtes Getränk ausgegeben werden. Zum Druckaufbau im Hydraulikzylinder 07 und/oder der Brühkammer kann eine nicht dargestellt, geräteseitige Pumpe dienen, die Fluid, im Fall eines Brühvorgangs bevorzugt heißes Wasser, in und durch die Komponenten der Brüheinheit 01 pumpt.

In der Fig. 4 ist eine Auswurfposition der Brüheinheit 01 dargestellt. Es ist erkennbar, dass die Antriebsmechanik 05 gegenüber der Position der Fig. 3 und 4 linear zurück oder vom Brühkopf 04 wegbewegt wurde. Ein Verschwenken zurück in die Mahlposition der Fig. 1 hat noch nicht stattgefunden. Stattdessen ist eine zusätzliche Betätigung oder Verstellung des Hydraulikzylinders 07 erfolgt und dargestellt. In der Ausführungsform der Fig. 4 ist der Hydraulikzylinder 07 als zwei teleskopartig ineinander angeordnet oder in Serie geschaltete Einzelzylinder 07.1 und 07.2 ausgeführt.

Der zweite Einzelzylinder 07.2 umfasst einen geringeren Durchmesser oder Querschnitt als der erste Einzelzylinder 07.1. Weiterhin kann der erste Einzelzylinder 07.1 ein Anschlag aufweisen, der den Hub des ersten Einzelzylinders 07.1 begrenzt. In der Darstellung der Fig. 4 ist erkennbar, dass über ein Füllen oder Betätigen der beiden Einzelzylinder 07.1, 07.2 der Brühkammerboden 06 so höhenverstellbar gegenüber der Brühkammer 03 oder der Brühkammerwand 11 ist, so dass der Brühkammerboden 06 bis an einen oberen Rand 16 der Brühkammerwand 11 verstellt werden kann. Dies ermöglicht dann, dass ein Auswerfer 17 zum Abschluss eines Getränkebezugs oder Brühvorgangs den ausgelaugten Trester oder das verbleibende Getränkesubstratmehl 09 auswerfen kann. Die Möglichkeit eines hydraulischen Auswurfs des Getränkesubstratmehls 09 nach dem Brühvorgang ermöglicht weiterhin in vorteilhafterweise eine sehr kompakte Ausgestaltung der Brüheinheit 01. In der Fig. 4 ist nochmals erkennbar, dass der Hydraulikzylinder 07 das untere Ende der Brühkammer 03 ausbildet. Besonders vorteilhaft ist, dass keine zusätzlichen Bauteile, wie beispielsweise ein Stößel, zum Verstellen des Brühkammerbodens 06 bodenseitig über den Hydraulikzylinder 07 hervorragt oder übersteht. Dies bedeutet auch, dass der Bauraum, der zum Einbau der Brüheinheit 07 vorgesehen werden muss ausschließlich oder zumindest ganz wesentlich durch das Gehäuse 02 der Brüheinheit definiert wird und kein zusätzlicher Bauraum vorgesehen werden muss, für Bauteile, die zu gewissen Zeitpunkten des Brühvorgangs wesentlich aus der Brüheinheit 01 oder aus dem Gehäuse 02 der Brüheinheit 01 hervorstehen oder überstehen.

Über die dargestellte Ausgestaltung mit einem rein hydraulisch betätigten Brühkammerboden kann eine Minimierung des Restfluids, bevorzugt Restwassers, ermöglicht werden. Denn das Fluid, bevorzugt Wasser kann je nachdem in welche Bereiche der Brüheinheit es eingedrungen oder vorgedrungen ist, grundsätzlich in zwei Kategorien, nämlich sauber und unsauber, unterteilt werden. Fluid oder Wasser, welches das Gegendruckventil 08 noch nicht passiert hat, kann als sauber und hygienisch unbedenklich wiederverwendet werden. Dazu kann das Fluid/Waser aus dem/den Hydraulikzylindern zurück, zum Beispiel in einen Fluid- oder Wassertank gefördert werden. Fluid oder Wasser, welches das Gegendruckventil 08 passiert hat, wird als unsauber eingestuft und behandelt und wird entweder über einen Getränkeauslauf der Getränkezubereitungsvorrichtung oder aus der Brüheinheit in eine Tropfwasserschale abgeführt. Folglich kann Fluid, welches als Hydraulikfluid in den Hydraulikzylindern 07.1, 07.2 zum Einsatz kommt, wiederverwendet werden und wird daher nicht in eine Tropfwasserschale abgeführt. Dadurch kann die Tropfwasserschale klein dimensioniert sein. Dies kann auch zu Verkleinerung der Getränkezubereitungsvorrichtung insgesamt beitragen.

Besonders vorteilhaft bei der Wiederverwendung von Hydraulikfluid ist, wenn das Fluid in einem unverzweigten Fluidpfad innerhalb der Brüheinheit 01 bis zum Gegendruckventil 08 fließt und somit die Brüheinheit bis zum Gegendruckventil 08 einen unverzweigten Fluidpfad aufweist.

Eine geringfügige Ausnahme bildet ein Hebel 18 der Antriebsmechanik 05, der in der Auswurfposition der Fig. 4 geringfügig über ein Bodenteil 19 des Gehäuses 02 der Brüheinheit 01 übersteht. So kann im Bereich des Bodenteils 19 eine nicht im Detail dargestellte Öffnung oder Ausnehmung im Gehäuse 02 realisiert sein. Abgesehen von einem zeitweisen Hervorstehen oder Überstehen des Hebels 18 kann die Brüheinheit 01 jedoch so realisiert sein, dass keine Bauteile oder Komponenten über die einhüllende Kontur des Gehäuses 02 überstehen oder hervorragen.

### Bezugszeichen

- 01: Brüheinheit
- 02: Gehäuse
- 03: Brühkammer
- 04: Brühkopf
- 05: Antriebsmechanik
- 06: Brühkammerboden
- 07: Hydraulikzylinder
- 08: Gegendruckventil
- 09: Getränkesubstratmehl
- 10: Befüllöffnung
- 11: Brühkammerwand
- 12: Führung
- 13: Bereich des Hydraulikzylinders
- 14: Auslassventil
- 15: Auslauf
- 16: Rand
- 17: Auswerfer
- 18: Hebel
- 19: Bodenteil

## Patentansprüche

1. Brüheinheit (01) für eine Getränkezubereitungsvorrichtung, insbesondere einen Kaffee- und/oder Espressovollautomaten, mit einer Antriebsmechanik (05) zum Verschwenken und/oder linearen Verfahren einer Brühkammer (03) zwischen mehreren Positionen, wobei die Brüheinheit (01) ein die Antriebsmechanik (05), die Brühkammer (03) und einen, in einer Brühposition die Brühkammer (03) verschließenden Brühkopf (04) aufnehmendes Gehäuse (02) aufweist, wobei der Brühkammer (03) und/oder dem Brühkopf (04) ein Hydraulikzylinder (07) zugeordnet vorgesehen ist, der ebenfalls in dem Gehäuse (02) angeordnet ist,
**dadurch gekennzeichnet,**
**dass** das Gehäuse (02) ein Volumen von 1.650 ccm, bevorzugt 1.450 ccm, nicht übersteigt.

2. Brüheinheit nach Anspruch 1,
**dadurch gekennzeichnet,**
**dass** das Gehäuse (02) eine Höhe von 185 mm, bevorzugt 180 mm, nicht übersteigt.

3. Brüheinheit nach Anspruch 1 oder 2,
**dadurch gekennzeichnet,**
**dass** das Gehäuse (02) eine Breite von 85 mm, bevorzugt 80 mm, nicht übersteigt.

4. Brüheinheit nach einem der vorhergehenden Ansprüche,
**dadurch gekennzeichnet,**
**dass** das Gehäuse (02) eine Tiefe von 185 mm, bevorzugt 175 mm, nicht übersteigt.

5. Brüheinheit nach einem der vorangehenden Ansprüche,
**dadurch gekennzeichnet,**
**dass** die Antriebsmechanik (05) zur Verstellung der Brühkammer (03) in eine Verschlussposition eingerichtet ist, wobei die Antriebsmechanik (05) so ausgebildet ist, dass allein über die Antriebsmechanik (05), insbesondere ohne Verstellung des Hydraulikzylinders (07) die Brühkammer (03), insbesondere eine Brühkammerwand (11), zur dichtenden Anlage an dem Brühkopf (04) bringbar ist.

6. Brüheinheit nach einem der vorangehenden Ansprüche,
**dadurch gekennzeichnet,**
**dass** die Antriebsmechanik (05) so ausgebildet ist, dass ein lineares Verfahren zwischen einer offenen Stellung und einer Verschlussposition der Brühkammer (03) ermöglicht wird, wobei ein Verfahrweg beim linearen Verfahren weniger als 60 mm, bevorzugt weniger als 50 mm, beträgt.

7. Brüheinheit nach einem der vorangehenden Ansprüche,
**dadurch gekennzeichnet,**
**dass** der Hydraulikzylinder (07) so mit der Brühkammer (03) zusammenwirkend ausgebildet ist, dass mittels einer Verstellung des Hydraulikzylinders (07) ein Brühkammerboden (06) gegenüber einer Brühkammerwand (11) höhenverstellbar ist.

8. Brüheinheit nach einem der vorangehenden Ansprüche,
**dadurch gekennzeichnet,**
**dass** der Hydraulikzylinder (07) ein unteres Ende der Brühkammer (03) bildet und insbesondere keine Bauteile zum Verstellen des Brühkammerbodens (06) bodenseitig über den Hydraulikzylinder (07) hervorragen oder überstehen.

9. Brüheinheit nach einem der vorangehenden Ansprüche,
**dadurch gekennzeichnet,**
**dass** der Hydraulikzylinder (07) einen Fluideinlass aufweist, der fluidleitend mit einer Brühfluidzuleitung der Getränkezubereitungsvorrichtung verbindbar ist wobei der Hydraulikzylinder (07) mit einem ausgangsseiteigen Überdruckventil (08) versehen sind, das in fluidleitender Verbindung mit der Brühkammer (03) ausgebildet ist, welches beim Überschreiten eines Grenzdrucks die Zufuhr von Brühfluid in die Brühkammer (03) freigibt, sodass Brühfluid aus den Hydraulikzylinder (07) abfließt und in die Brühkammer (03) einströmt.

10. Getränkezubereitungsvorrichtung, insbesondere Kaffee- und/oder Espressovollautomat, mit einer, insbesondere entnehmbaren, Brüheinheit (01) und einem fest verbauten, elektromotorischen Antrieb zum Antrieb einer Antriebsmechanik (05) der Brüheinheit (01) wobei der Antrieb Kopplungsmittel zum, bevorzugt lösbaren, Koppeln mit der Brüheinheit (01) umfasst,
**dadurch gekennzeichnet,**
**dass** die Brüheinheit (01) nach einem der Ansprüche 1 bis 9 ausgebildet ist.

11. Getränkezubereitungsvorrichtung nach Anspruch 10,
**dadurch gekennzeichnet,**
**dass** die Brüheinheit (01) entnehmbar ausgebildet ist.

12. Getränkezubereitungsvorrichtung nach Anspruch 10 oder 11,
**dadurch gekennzeichnet,**
**dass** der Antrieb ein maximales Ausgangsdrehmoment von weniger als 3,0 Nm, bevorzugt weniger als 2,2 Nm, erzeugt.

13. Getränkezubereitungsvorrichtung nach einem der Ansprüche 10 bis 12,
**dadurch gekennzeichnet,**
**dass** der Antrieb so ausgebildet und eingerichtet ist, dass ein Verschwenken und/oder lineares Verfahren der Brühkammer (03) aus einer Mahlposition in eine Verschlussposition in weniger als 4s, bevorzugt in weniger als 3s, erfolgt.

14. Getränkezubereitungsvorrichtung nach einem der Ansprüche 10 bis 13,
**dadurch gekennzeichnet,**
**dass** die Breite (B) der Brüheinheit (01) samt Antrieb der Getränkezubereitungsvorrichtung, der bevorzugt einen Motor und eine mechanische Übersetzung umfasst, insbesondere in einem gekoppelten Zustand weniger als 115 mm, bevorzugt weniger als 113 mm, beträgt.

15. Getränkezubereitungsvorrichtung nach einem der Ansprüche 10 bis 14,
**dadurch gekennzeichnet,**
**dass** das Volumen der Brüheinheit (01) zusammen mit dem Antrieb der Getränkezubereitungsvorrichtung weniger als 1.750 ccm, bevorzugt weniger als 1.650 ccm, beträgt.

16. Getränkezubereitungsvorrichtung nach einem der Ansprüche 10 bis 15,
**dadurch gekennzeichnet,**
**dass** der Antrieb so ausgebildet und eingerichtet ist, dass ausgehend von einer Mahlposition der Brühkammer (03) ein Hin- und ZurückSchwenken, bevorzugt gegen einen Anschlag der Brüheinheit (01) oder der Getränkezubereitungsvorrichtung ausführbar ist.

17. Getränkezubereitungsvorrichtung nach einem der Ansprüche 10 bis 16,
**gekennzeichnet durch**
eine Fluidzuleitung für eine Übertragung eines Fluids, bevorzugt Brühfluids, an die Brüheinheit (01), wobei die Fluidzuleitung so ausgebildet ist, dass sie in einem eingesetzten Zustand der Brüheinheit (01) permanent mit der Brüheinheit (01) verbunden ist und nur getrennt oder unterbrochen wird, wenn die Brüheinheit (01) aus der Getränkezubereitungsvorrichtung entnommen wird.
